# EUROPEAN PATENT SPECIFICATION

(11) **EP 0 477 242 B1**
(45) Date of publication and mention of the grant of the patent: **23.08.1995**
(21) Application number: 90909352.8
(22) Date of filing: 15.06.1990
(51) Int. Cl.: H04J 3/16, H04Q 11/04

(54) **DATA SWITCHING NODES**
DATENVERMITTLUNGSKNOTEN
NOEUDS DE COMMUTATION DE DONNEES

(30) Priority: 16.06.1989 GB 8913869; 19.09.1989 GB 8921173
(43) Date of publication of application: 01.04.1992
(73) Proprietor: BRITISH TELECOMMUNICATIONS public limited company, London EC1A 7AJ (GB)
(72) Inventor: CLARK, Alan, Douglas 9 Meadowlands Kirton, Suffolk IP10 0PP (GB); TURNER, Michael, Neil 26 Annbrook Road, Suffolk IP2 9JN (GB)
(74) Representative: Semos, Robert Ernest Vickers
(86) International application number: GB9000929
(87) International publication number: WO9016121

(56) References cited:
- EP-A- 0 186 141
- EP-A- 0 281 010
- EP-A- 0 282 197
- US-A- 3 881 064
- US-A- 4 658 152
- Proceedings of the International Switching Symposium, Session 31 B, paper 6, 7-11 May 1984, Florence, Italy G. TAILLE et al.: "A Laboratory Model of aSignalling Transfer Point (STP)", pages 1-7

## Description

The present invention relates to nodes for switching a number of data channels and is particularly concerned with nodes in digital networks used to switch multiplexed low speed data channels.

Within a high bandwidth digital channel, it is potentially possible to provide a large number of data channels at rates as low as 400 bits per second. However at the node where the low speed data channels are interfaced with the rest of the network it is necessary to provide a multiplexer for switching data between selected channels and the network. In practice conventional multiplexer designs constitute a bottleneck which prevents the full channel-carrying potential of the network from being realised. If the main data path of the network has a bandwidth, for example, of tens of kilobits per second and the low speed data paths have bandwidths of hundreds of bits per second then it would be theoretically possible to interface as many as 100 of the low speed data channels to the network via a single node. Conventional matrix switches used in multiplexers are essentially serial devices and so the multiplexer needs to function with the same high bandwidth as the main data path. Known multiplexer designs, e.g. as disclosed in EP-A-0186141 and US-A-4658152, are inefficient in handling and switching large numbers of data channels at the high speeds which would be required in practice to provide this sort of bandwidth. In the designs of these prior art documents, data in multiplexed frames is received at a high speed data interface circuit for distribution to a number of low speed interface circuits. A translation map is addressed with the sequence number of the incoming data byte to retrieve the address (identity) of the low speed interface circuit and the data is placed on a common bus together with the destination address. In the reverse direction the map is addressed with the sequence number of the outgoing data byte to obtain the identity of the source interface circuit. This identity is placed on the bus to command the source circuit to place its data byte on the bus for receipt and assembly into a frame for transmission by the high speed interface circuit.

According to the present invention a data switching node comprises a plurality of data lines including high speed data (link) lines and low speed data (port) lines and a switch connected to the data lines and arranged to switch data from one of the data lines to a selected other one of the data lines, the switch comprising a distributed multiplexer having a number of switching modules connected in parallel to a common data bus and arranged to communicate data with the common data bus and a control means also connected to the common data bus and arranged to communicate control signals with the common data bus to control and addressing of the switching modules such that data received by a source switching module connected to the one data line is transmitted directly via the common data bus to a destination switching module connected to the selected other one of the data lines in response to a control signal from the control means characterised in that the control means is arranged to associate said data received by said source switching module with the address of the destination switching module and with a respective logical channel of an outgoing multiplexed data frame of the destination switching module, in that the destination switching module is arranged to associate with that logical channel a predetermined number of free time slots in the outgoing data frame such as to provide the required capacity for that channel, and in that the destination switching module is arranged to assemble said received data into the associated time slots of the outgoing data frame in accordance with the members of a corresponding logical channel-associated circular linked list of the outgoing time slots, each said received data being assembled into a respective one of the time slots defined by a next temporally-occurring member of said list in relation to the time of receipt of said received data.

Preferably the control means includes a look-up table means arranged in response to address information associated with the data from the one data line to provide the address of the destination switching module and to enable the said destination switching module so that it reads the data from the common data bus and outputs it in the outgoing data frame on the selected other one of the data lines.

The present invention provides a distributed multiplexer in which the switching functions are carried out in parallel rather than serially. It is known to use line interface modules distributed along a common bus. The paper by A. S. Acampora et al published at pages 932 to 938 of IEEE International Conference on Communications Vol. 2. 1983 discloses one example of such a system.

According to a second aspect of the present invention there is provided a method of operating a multiplexer including receiving a plurality of channels and transmitting the channels in respective interleaved time slots of an outgoing multiplexed data frame, characterised by the steps of assigning to an incoming channel a respective logical channel of an outgoing data frame, associating with that logical channel a predetermined number of free time slots in the outgoing data frame such as to provide the required capacity for that channel, associating the data of the time slots of the incoming channel with the respective assigned logical channel, and assembling the received data of the incoming channel into respectively associated time slots of the outgoing data frame in accordance with successive members of a corresponding logical channel-associated circular linked list of outgoing time slots, each said data being read from the common data bus and assembled into a respective one of the time slots of the outgoing data frame as defined by a next temporally-occurring member of said list in relation to the time of reading of said data from the common data bus.

The second aspect of the present invention provides a method of operating a multiplexer which is particularly suitable for multiplexers having distributed switching modules. One possible drawback of distributed switching architectures is that there is a high addressing overhead associated with the transmission of data along the bus. This disadvantage can be overcome by using, in particular, byte interleaving in which the addressing overhead is shared amongst a number of bits. However with conventional multiplexing techniques byte interleaving tends to slow the operation of the multiplexer because there is a delay equal to at least the duration of a single frame of data before the outgoing frame of data can be assembled and transmitted. Byte interleaving increases the length of the frame and so increases this delay. The present invention overcomes this problem by associating data channels with a logical channel rather than with a predetermined position within the data frame. The logical channels are mapped flexibly onto the byte positions of the outgoing frames so that the first available position in the frame is written to and the frame is in this manner continuously filled. This enables the incoming and outgoing frames to overlap in time to the extent that they are substantially coincident and so reduces the delay associated with conventional multiplexing techniques.

Preferably the method includes detecting the occurrence of slip between incoming and outgoing data and altering the correspondence between said received data of the incoming channel and the members of the corresponding linked list.

This preferred aspect of the present invention relates to timing jitter which results in the data arriving at the multiplexer earlier or later than the expected time. This can potentially cause a slip to occur, which results in temporary corruption of the data stream. By this aspect of the present invention the probability of a further slip occurring is substantially reduced.

A shortcoming of existing multiplexers results from the strict mapping of data channels to byte positions which is usually required. When a channel is cleared, as the terminal using the channel has completed its call, the deallocated channel would normally be merged with other deallocated channels forming a pool of empty channel capacity from which new channels would be allocated. With a multiplexing strategy requiring strict mapping of channels to byte positions it is possible to have sufficient spare capacity to create a new channel but for the spacing of the vacant byte positions to be such that the channel cannot be allocated. A property of the present invention is that a strict mapping of channels to byte positions is not required, and hence any unused channel capacity can be allocated to new data channels.

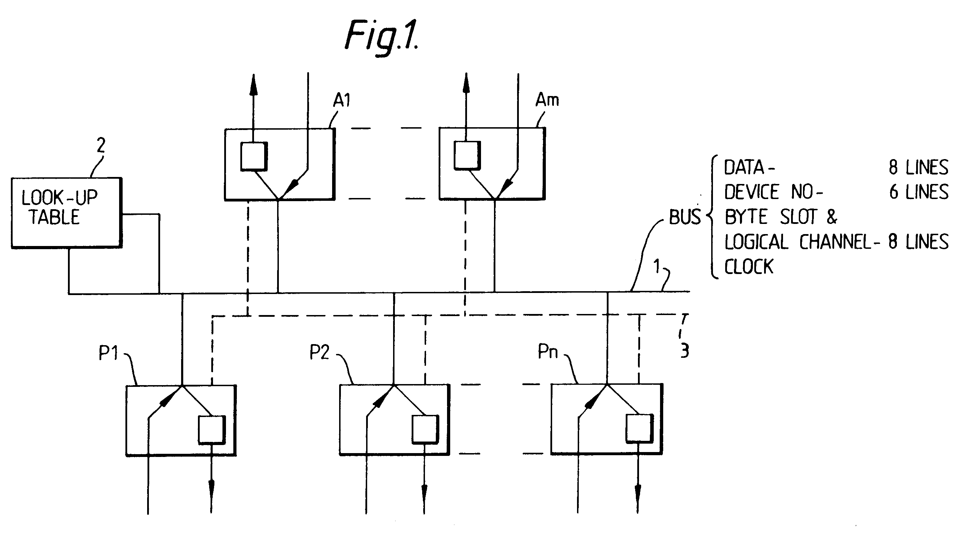

A data switching node in accordance with the present invention is now described in detail with reference to the accompanying drawings, in which:-
Figure 1 is a block diagram of a multiplexer;
Figure 2 is a timing diagram for the multiplexer of Figure 1;
Figure 3 is a diagram showing the format of a data frame;
Figure 4 is a diagram showing overlapping incoming and outgoing frames;
Figure 5 is a block diagram of a serial data input stage;
Figure 6 is a diagram showing the mapping of logical channels into a data frame;
Figure 7A is a diagram showing slip error between incoming and outgoing frames;
Figure 7B is a diagram showing the frames of Figure 7A after realignment;
Figure 8 is a block diagram of a serial data output stage; and
Figure 9 shows details of part of a look-up table.

A distributed multiplexer for interfacing low speed data channels to a high-speed data network comprises a number of switching modules connected in parallel to a common data bus 1. A control module 2 is also connected to the bus and arranged to transmit and receive control signals via the bus 1. Contention lines 3 link the switching modules in a daisy chain figuration.

The switching modules include aggregate modules A1-Am and ports P1-Pn. The aggregate modules Al-Am are arranged to transmit and receive time-division multiplexed data streams via a high-speed data path (not shown). The ports P1-Pn by contrast are arranged to transmit and receive non-multiplexed low-speed data streams via correspondingly low-bandwidth data paths.

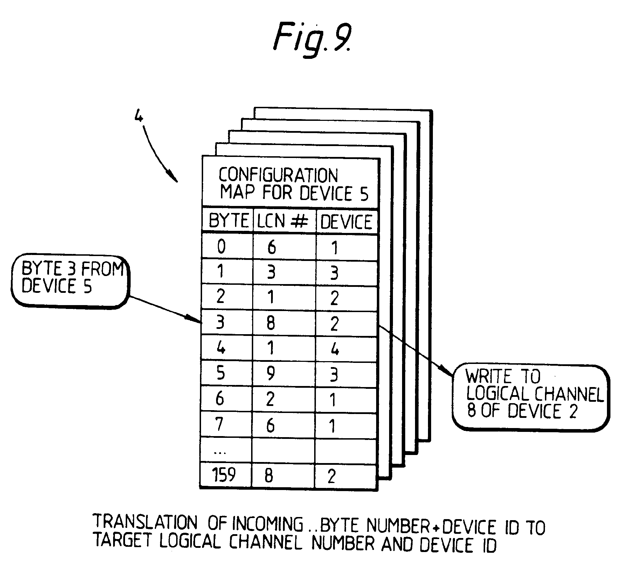

In use, when a switching module receives data it first transmits a contention signal via the contention line 3 to gain access to the bus 1 using a contention mechanism such as a daisy chain. Having gained access to the bus the switching module then outputs the received data together with its device number which uniquely identifies the switching module in question and the byte slot number of the received data. The source device number and byte slot number are transmitted via the bus to the control module 2. The control module 2 includes a look-up table 4 (see Figure 9) which in practice is held in RAM and originally configured via an associated microprocessor. The look-up table 4 identifies the destination device number and logical channel number appropriate to the received source device number and byte slot number and outputs this information onto the bus. The destination device then detects the signal from the control module identifying it and in response to this signal reads the data transmitted from the source device together with the logical channel number transmitted by the control module. The destination device then outputs the data, directly on its associated low-speed data channel in the case of a port module or alternatively as part of a byte-interleaved time-division multiplexed frame in the case of an aggregate module.

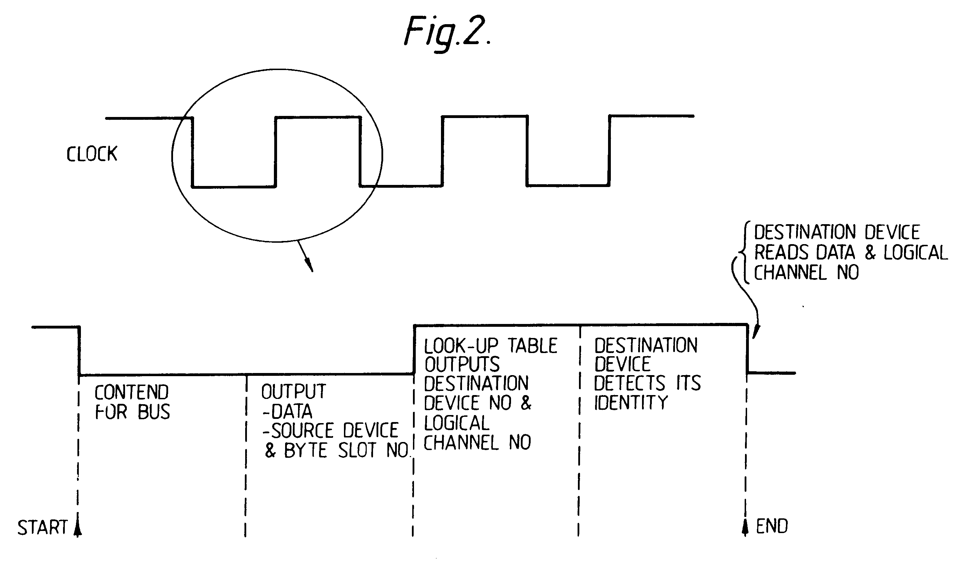

The timing of the above operations is illustrated schematically in Figure 2. Each clock cycle, which will typically be of one microsecond in duration, is divided into four phases. In the first phase the receiving module contends for the bus, in the next phase that module outputs the data, in the phase after that the look-up table 4 outputs the destination device number and logical channel number and in the final phase the destination device detects its identity and then at the end of the cycle reads the data and the logical channel number.

The aggregate switching modules A1-Am include on their output sides output buffers 5 which use a linked list 6 to control the mapping of data from the bus into slots in the outgoing data frame. The aggregate switching modules A1-Am use a multiplexing method described in greater detail below which greatly reduces the delay between incoming and outgoing frames so that the system as a whole is able to use byte interleaving without any significant penalty in terms of speed of operation.

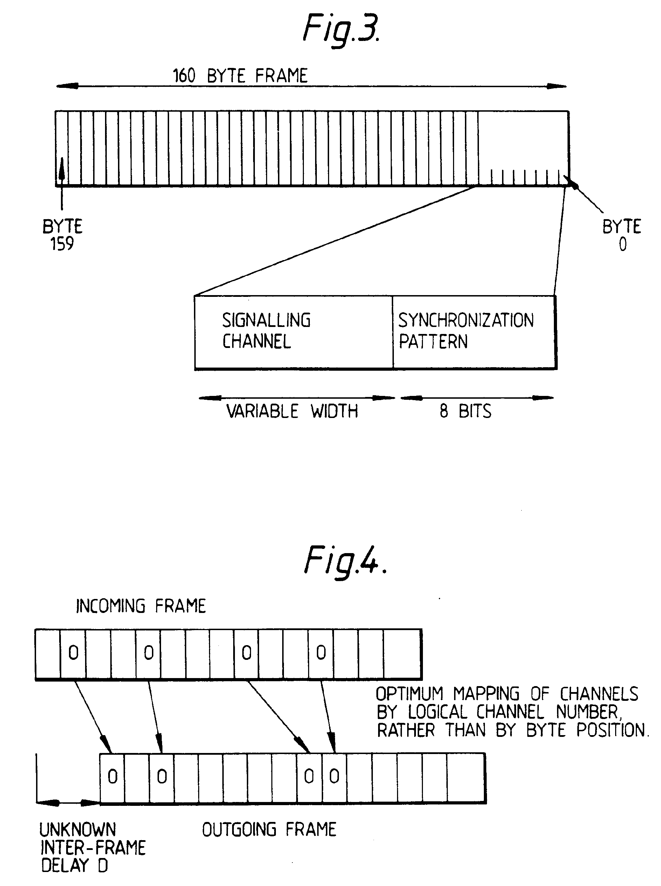

Data is transmitted to and from the high speed data paths in byte interleaved frames as shown in Figure 3. Each frame contains an 8 bit synchronisation pattern, a signalling channel and a number of data bytes. Each byte within the frame corresponds to a 400 bit/s channel, hence a 1200 bit/s channel is allocated 3 bytes, a 2400 bit/s channel allocated 6 bytes and so on. The byte positions associated with each channel are identified by the logical channel number of the channel (lcn ). For high-speed composite data channels with speeds lower than 64 kbit/s the frame length will be proportionally shorter (140 bytes for 56 kbits, 120 bytes for 48 kbits, 48 bytes for 19200 b/s etc). The signalling channel is normally part of the frame header but may be extended to incorporate any unused data channels. The bandwidth of the signalling channel may thus be dynamically controlled without affecting data traffic. Using logical channel mapping for the control of data switching, as shown schematically in Figure 4, has the advantage that incoming and outgoing frames may overlap and may wander in time with respect to each other without corruption of data. Moreover the outgoing frame can be assembled and output in a continuous process so that the inter-frame delay D is reduced to a fraction of the frame's duration.

In use switching modules are interconnected using the bus. Data bytes output onto the bus are identified with the information needed to identify correctly the destination device and channel. This information is local to the multiplexer and the logical channel number is local to the specific device. If the destination is a multiplexed output the logical channel number identifies the set of byte positions that the data may be written to: if the destination is a simple port the logical channel number has no significance.

Control information relating to the state of the interfaced lines may be transferred via the bus in the same way as normal data. The control port is given a unique logical channel number but may not be used for data channels. This means that the interface status may be carried across the network with the data and will be updated typically every 20mS. In addition the interface status is available via a separate microprocessor port and may be read or set independently of the direct transfer mechanism. Common channel signalling may be used to transfer the interface status across the network using the signalling channel.

Incoming serial data is converted into 8 bit parallel format. When a complete byte has been assembled the device ID and the byte position are used to obtain the destination device and logical channel using a look-up table in the manner described above. The look-up table may be held either within the serial interface device or in external memory. If the device is configured as a simple port, the byte position value has no significance and is pre-set to some arbitrary value. Figure 9 shows detail of part of a look-up table 4 mapping byte positions from a given device to the appropriate logical channel numbers and destination device numbers.

In the case of multiplexed data received via one of the aggregate switching modules A1-Am the incoming multiplexed frame contains synchronisation information and hence the start of a frame may be uniquely determined. Data bytes are read sequentially and their position within the incoming frame, that is their byte slot number, and device ID converted via the look-up (translation) table to give the destination device and logical channel. When the destination is a data port it has a single logical channel. The frame buffer 5 associated with the output stage is used as a FIFO queue to remove timing irregularities.

Simply by altering the mapping defined by the look-up table the method described above can carry out any form of switching operation including by-pass, drop and insert, cross connect etc.

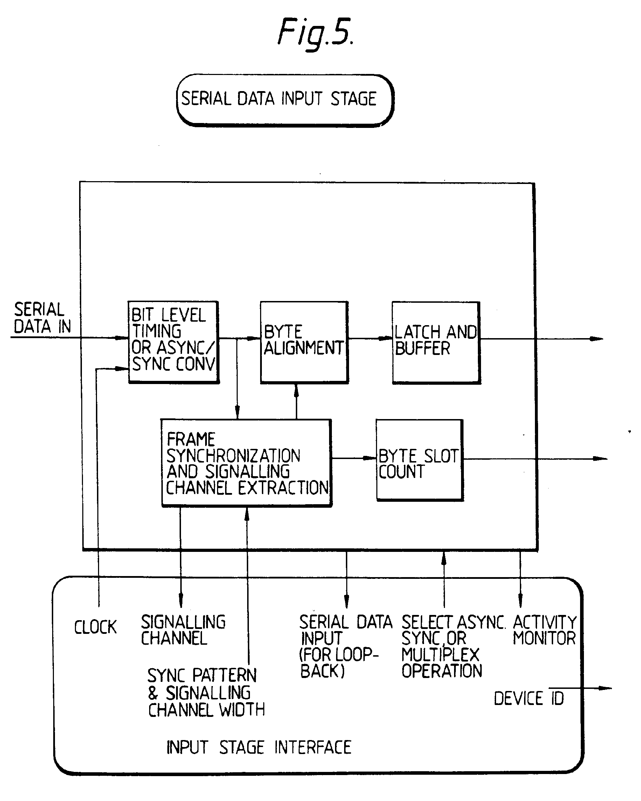

Figure 5 shows an input stage of an aggregate switching module Am. The input stage consists of 5 basic elements:-
(i) bit level timing and asynchronous/synchronous converter. Incoming serial data is sampled using a receive clock and, if set to asynchronous mode, asynchronous to synchronous conversion of the type defined in the CCITT V22 standard is applied.
(ii) frame synchronisation and signalling channel extraction - this element is only enabled if the received data stream is multiplexed. The frame synchronisation pattern is detected (and corrective action taken if it is not detected for k successive frames). The bytes corresponding to the signalling channels are extracted and routed to the input signalling channel processing stage.
(iii) Byte alignment - as the multiplexer uses byte interleaving it is necessary to align incoming data in order that channels may be correctly extracted. This element consists essentially of a serial to parallel converter that can be reset on command from the frame synchronisation stage.
(iv) Latch and buffer - a received byte is temporarily held in a latch whilst the device is contending for use of the bus.
(v) Byte slot counter - in order that received frames can be de-multiplexed it is necessary to provide the received byte slot number and the device ID. The first of these is provided by a simple counter which is incremented for each byte received, and the second is programmed during system initialisation.

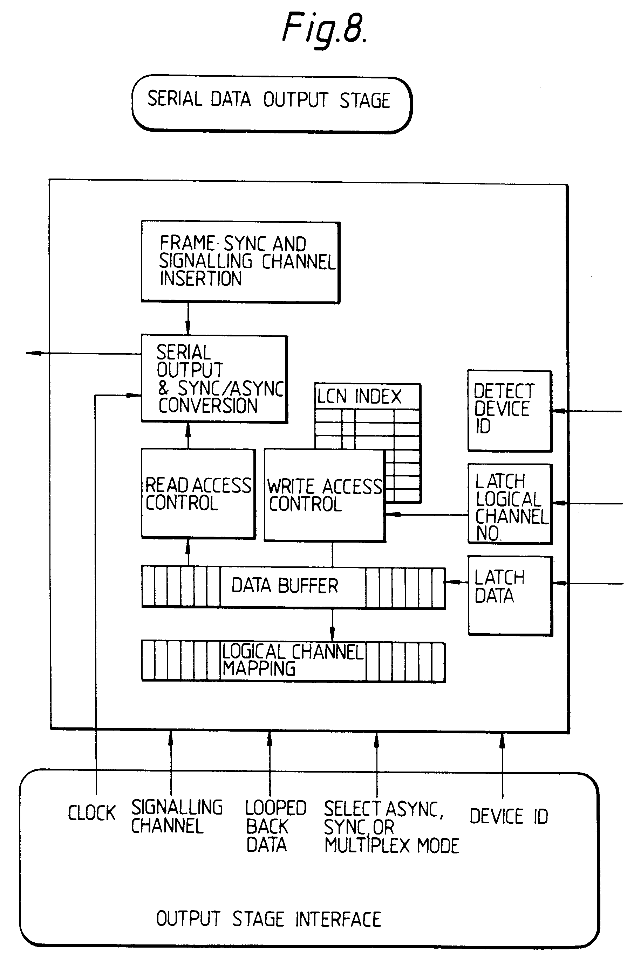

The output stage (Figure 8) of the aggregate switching modules A1-Am is more complex than the input but incorporates the heart of the multiplexing technique. From the bus, the stage receives a data byte and logical channel number. The key to the operation of the stage is then the manner in which it determines where to write the data.

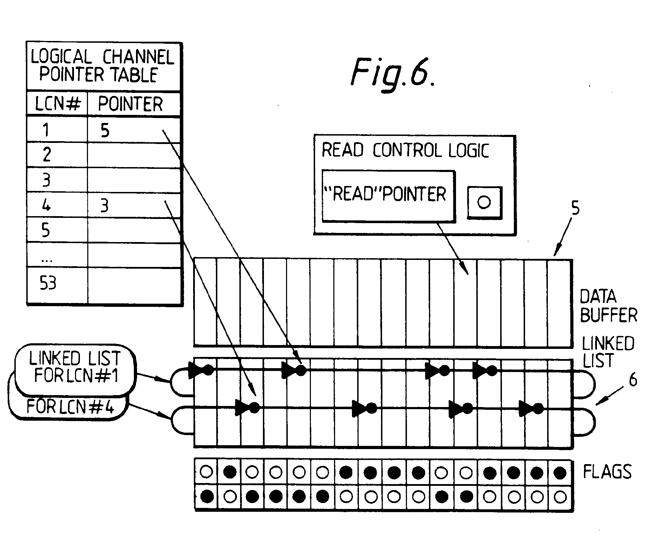

The output buffer contains 160 sets, each set comprising a data byte, linked list pointer, read flag and written flag. Within the linked list field 6 a circular linked list exists for each active logical channel. If the output is a simple port the list corresponds to a single logical channel. A separate index table contains a write pointer for each logical channel which corresponds to the next empty position in the buffer for that logical channel. Figure 6 shows schematically the manner in which linked lists are used to allocate data bytes to logical channels rather than literal byte positions within the outgoing data frame.

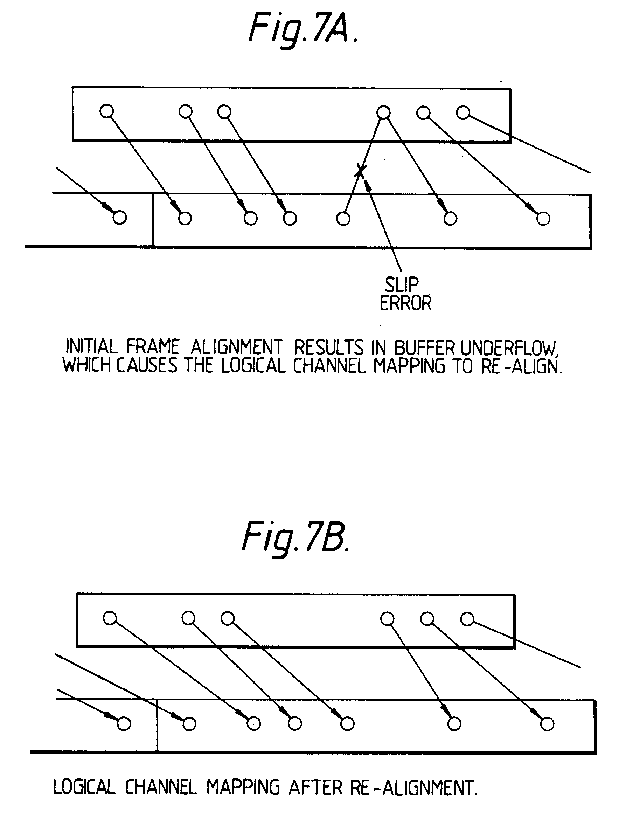

The incoming logical channel number provides direct access to the corresponding write pointer. The pointer is read and used to access the next empty buffer position for the channel. The data byte is written to the buffer, the corresponding written flag set, and the next write pointer read from the link list and placed back in the index table. A read pointer is used to access the 160 data bytes sequentially. As each byte is read the written flag is cleared and the read flag set. For the first byte written to a logical channel a search procedure is used to find the write pointer position corresponding to minimum delay. During the first frame following initialisation buffer underflow may occur resulting in errors in the logical channel output stream. Figure 7A shows slip-error of this type occurring. A "slip-procedure" is used to allow the relative positions of incoming and outgoing data bytes to slide increasing the delay until no further errors occur. This process affects only the logical channel concerned and does not interfere with any other channels. Figure 7B shows the logical channel mapping after re-alignment.

In addition to the buffer control logic the output stage shown in Figure 8 contains the following elements:
(i) frame synchronisation word generation and signalling channel insertion circuits.
(ii) serial output stage incorporating synchronous/asynchronous conversion.
(iii) loopback data insertion.

The operation of the remaining elements of the output stage are substantially the inverse of the corresponding element of the input stage.

As an alternative to the preferred embodiment described above, the look up table 4 used to map incoming device number and byte slot number to outgoing device number and logical channel number may be distributed amongst the switching modules. Each switching module would then hold a small look-up table containing a destination device number and logical channel number. This alternative embodiment has the advantages of reduced component count and improved bus capacity but the disadvantage of requiring additional memory capacity within the switching module.

As a further alternative means of implementing the present invention the memory used to hold the linked lists pertaining to the output stage of the switching modules could be physically located in a common device, however the logic related to the control of the output remains located within the switching module. This alternative embodiment has the possible advantage of permitting the use of a standard memory integrated circuit rather than requiring memory to be available in each switching module, and the disadvantage of requiring a greater degree of activity on the bus connecting the control logic to the memory device during slip events which in the preferred embodiment occurs internally within each switching module.

It will be appreciated that where in the described embodiment mention is made of a logical channel number in relation to a low-speed non-multiplexed data stream, this is merely a reference to the non-operational number output by the control module and which the port module does not process.

## Claims

1. A data switching node comprising a plurality of data lines including high speed data lines and low speed data lines and a switch connected to the data lines and arranged to switch data from one of the data lines to a selected other one of the data lines, the switch comprising a distributed multiplexer having a number of switching modules (A1-Am, P1-Pn) connected in parallel to a common data bus (1) and arranged to communicate data with the common data bus (1) and a control means (2) also connected to the common data bus (1) and arranged to communicate control signals with the common data bus to control the addressing of the switching modules (A1-Am, P1-Pn) such that data received by a source switching module connected to the one data line is transmitted directly via the common data bus (1) to a destination switching module connected to the selected other one of the data lines in response to a control signal from the control means (2), characterised in that the control means (2) is arranged to associate said data received by said source switching module with the address of the destination switching module and with a respective logical channel of an outgoing multiplexed data frame of the destination switching module, in that the destination switching module is arranged to associate with that logical channel a predetermined number of free time slots in the outgoing data frame such as to provide the required capacity for that channel, and in that the destination switching module is arranged to assemble said received data into the associated time slots of the outgoing data frame in accordance with the members of a corresponding logical channel-associated circular linked list of the outgoing time slots, each said received data being assembled into a respective one of the time slots defined by a next temporally-occurring member of said list in relation to the time of receipt of said received data.

2. A data switching node according to Claim 1, in which the control means (2) includes a look-up table means (4) arranged in response to address information associated with the data from the one data line to provide said address of the destination switching module and to enable the said destination switching module so that it reads the data from the common data bus and outputs it in the outgoing data frame on the selected other one of the data lines.

3. A data switching node according to Claim 2, in which the look-up table means (4) is in the form of respective look-up tables included within the switching modules and arranged in response to address information associated with the data from the one data line to provide the address of the said destination switching module.

4. A data switching node according to Claim 2 or Claim 3, in which the look-up table means (4) is arranged in response to said address information to transmit on the common data bus (1) the identity of said logical channel associated with the destination switching module.

5. A data switching node according to any one of the preceding claims, in which said predetermined number of free time slots are the first such number of the free time slots in the outgoing data frame with respect to the start of the frame.

6. A method of operating a multiplexer including receiving a plurality of channels and transmitting the channels in respective interleaved time slots of an outgoing multiplexed data frame, characterised by the steps of assigning to an incoming channel a respective logical channel of an outgoing frame, associating with that logical channel a predetermined number of free time slots in the outgoing data frame such as to provide the required capacity for that channel, associating the data of the time slots of the incoming channel with the respective aligned logical channel, and assembling the received data of the incoming channel into respectively associated time slots of the outgoing data frame in accordance with successive members of a corresponding logical channel-associated circular linked list of outgoing time slots, each said data being read from the common data bus and assembled into a respective one of the time slots of the outgoing data frame as defined by a next temporally-occurring member of said list in relation to the time of reading of said data from the common data bus.

7. A method according to Claim 6, including detecting the occurrence of slip between incoming and outgoing data and altering the correspondence between said received data of the incoming channel and the members of the corresponding linked list.

8. A method according to Claim 6 or Claim 7, for operating a multiplexer which includes a plurality of switching modules connected to a common data bus, each switching modules including a look-up table, the method further comprising the step of mapping incoming data channels at each switching module to outgoing logical channels by reference to the respective look-up table.

9. A method according to Claim 6 or Claim 7, for operating a multiplexer which includes a plurality of switching modules connected to a common data bus and a control module connected to the common data bus and including a look-up table, the method further comprising the step of mapping incoming data channels at each switching module to outgoing logical channels by reference to the look-up table in the control module.

10. A method according to Claim 8 or Claim 9, for operating a multiplexer in which at least one switching module includes an output buffer, the method further comprising mapping outgoing logical channels to outgoing time slot positions in the or a respective output buffer.

11. A method according to any one claims 6 to 9, wherein said predetermined number of free time slots are the first such number of the free time slots in the outgoing data frame with respect to the start of the frame.

## Patentansprüche

1. Datenschaltknoten, der mehrere Datenleitungen enthält, mit Hochgeschwindigkeitsdatenleitungen und Niedriggeschwindigkeitsdatenleitungen und einem Schalter, der mit den Datenleitungen verbunden ist und zum Schalten der Daten von einer der Datenleitungen zu einer ausgewählten anderen der Datenleitungen angeordnet ist, wobei der Schalter einen dezentralen Multiplexer enthält, mit einer Anzahl von Schaltmodulen (A1-Am, P1-Pn), die parallel mit einem gemeinsamen Datenbus (1) verbunden sind und zum Übertragen von Daten mit dem gemeinsamen Datenbus (1) angeorndet sind, und weiterhin Steuermittel (2) enthält, die ebenso mit dem gemeinsamen Datenbus (1) verbunden sind und zum Übertragen von Steuersignalen über den gemeinsamen Datenbus angeordnet sind, zum Steuern des Adressierens der Schaltmodule (A1-Am, P1-Pn) derart, daß die Daten, welche von einem mit der einen Datenleitung verbundenen Quellschaltmodul empfangen werden direkt über den gemeinsamen Datenbus zu einem Bestimmungsschaltmodul übertragen werden, das mit der ausgewählten anderen Datenleitung verbunden ist, in Reaktion auf ein Steuersignal von den Steuermitteln (2),
dadurch gekennzeichnet, daß
die Steuermittel (2) zum Zuordnen der von dem Quellschaltmodul empfangenen Daten zu der Adresse des Zielschaltmoduls und zu einem entsprechenden Logikkanal eines herausgehenden multiplexten Datenrahmen des Zielschaltmoduls angeordnet sind, daß das Zielschaltmodul zum Zuordnen dieses Logikkanals zu einer vorbestimmten Anzahl von freien Zeitschlitzen in dem herausgehenden Datenrahmen derart angeordnet ist, daß die erforderliche Kapazität für diesen Kanal vorgesehen wird und daß das Zielschaltmodul zum Einbringen der empfangenen Daten in die zugehörigen Zeitschlitze des herausgehenden Datenrahmens geeignet ist, gemäß den Mitgliedern einer entsprechenden logischen, Kanalzugehörigkeits- und kreisförmigen Verbindungsliste der herausgehenden Zeitschlitze, wobei die empfangenen Daten in einen entsprechenden Zeitschlitz eingebracht werden, der durch ein nächstes temporär auftretendes Mitglied der Liste definiert ist, im Verhältnis zur Empfangszeit der empfangenen Daten.

2. Datenschaltknoten gemäß Anspruch 1, in dem die Steuermittel (2) Suchtabellenmittel (4) enthalten, die zum Vorsehen der Adresse des Zielschaltmoduls vorgesehen sind, in Reaktion zu Adreßinformation im Zusammenhang mit den Daten von der einen Datenleitung, und zum derartigen Aktivieren des Zielschaltmoduls angeordnet sind, daß es die Daten von dem gemeinsamen Datenbus liest und sie in den herausgehenden Datenrahmen auf die ausgewählte andere Datenleitung ausgibt.

3. Datenschaltknoten nach Anspruch 2, in dem die Suchtabellenmittel (4) die Form von entsprechenden Suchtabellen aufweisen, welche in den Schaltmodulen enthalten sind und zum Vorsehen der Adresse des Zielschaltmoduls angeordnet sind, in Reaktion auf Adreßinformation im Zusammenhang mit den Daten von der einen Datenleitung.

4. Datenschaltknoten nach Anspruch 2 oder 3, in dem die Suchtabellenmittel (4) zum Übertragen der Identität des logischen Kanals, welcher zu dem Zielschaltmodul gehört, angeordnet ist, in Reaktion auf die Adreßinformation.

5. Datenschaltknoten nach irgendeinem der vorangehenden Ansprüche, in dem die vorbestimmte Anzahl der freien Zeitschlitze die erste Anzahl der freien Zeitschlitze in dem herausgehenden Datenrahmen ist, bezüglich dem Start des Rahmens.

6. Verfahren zum Betreiben eines Multiplexers mit dem Schritt des Empfangens von mehreren Kanälen und des Übertragens des Kanals in entsprechende sich überlappende Zeitschlitze eines herausgehenden multiplexten Datenrahmens,
gekennzeichnet durch
die Schritte des Zuordnens eines entsprechenden Logikkanals eines herausgehenden Rahmens zu einem hereinkommenden Kanal, des Zuordnens einer vorbestimmten Anzahl von freien Zeitschlitzen in dem herausgehenden Datenrahmen zu dem Logikkanal derart, daß die erforderliche Kapazität dieses Kanals vorgesehen wird, des Zuordnens der Daten der Zeitschlitze des hereinkommenden Kanals zu dem entsprechenden abgeglichenen Logikkanal und des Einbringens der empfangenen Daten des hereinkommenden Kanals in entsprechende zugehörige Zeitschlitze des herausgehenden Datenrahmens, gemäß den sukzessiven Mitgliedern einer entsprechenden logischen Kanalzugehörigkeits- und kreisförmigen Verbindungsliste der herausgehenden Zeitschlitze, wobei die Daten von dem gemeinsamen Datenbus gelesen werden und in einen entsprechenden Zeitschlitz des herausgehenden Datenrahmens eingebracht werden, die durch ein nächstes temporär auftretendes Mitglied der Liste definiert ist, in Beziehung zu der Zeit des Lesens der Daten von dem gemeinsamen Datenbus.

7. Verfahren nach Anspruch 6, mit einem Erfassen des Auftretens einer Verzögerung zwischen den hereinkommenden und den herausgehenden Daten und einem Verändern des Bezugs zwischen den empfangenen Daten des hereinkommenden Kanals und den Mitgliedern der entsprechenden Verbindungsliste.

8. Verfahren nach Anspruch 6 oder 7, zum Betreiben eines Multiplexers, der mehrere Schaltmodule enthält, welche mit einem gemeinsamen Datenbus verbunden sind, wobei jedes Schaltmodul eine Suchtabelle enthält, das Verfahren enthält weiterhin den Schritt des Zuordnens von hereinkommenden Datenkanälen an jedem Schaltmodul zu herausgehenden Logikkanälen durch den Bezug zu der entsprechenden Suchtabelle.

9. Verfahren gemäß Anspruch 6 oder 7, zum Betreiben eines Multiplexers mit mehreren Schaltmodulen, die mit einem gemeinsamen Datenbus verbunden sind und mit einem Steuermodul, das mit dem gemeinsamen Datenbus verbunden ist und eine Suchtabelle enthält, wobei das Verfahren weiterhin den Schritt des Zuordnens von hereinkommenden Datenkanälen an jedem Schaltmodul zu herausgehenden Logikkanälen enthält, durch eine Bezugnahme zu der Suchtabelle in dem Steuermodul.

10. Verfahren nach Anspruch 8 oder 9, zum Betreiben eines Multiplexers in dem zumindest ein Schaltmodul einen Ausgangspuffer enthält, wobei das Verfahren ferner das Zuordnen von herausgehenden Logikkanälen zu herausgehenden Zeitschlitzpositionen in dem oder einem entsprechenden Ausgangspuffer enthält.

11. Verfahren nach irgendeinem der Ansprüche 6 bis 9, in dem die vorbestimmte Anzahl von freien Zeitschlitzen die erste derartige Anzahl der freien Zeitschlitze in dem herausgehenden Datenrahmen bezüglich dem Start des Rahmens ist.

## Revendications

1. Noeud de commutation de données, comprenant une pluralité de lignes de données comportant des lignes de données à grand débit et des lignes de données à faible débit, et un commutateur connecté aux lignes de données et disposé pour commuter des données entre une des lignes de données et une autre des lignes de données sélectionnée, le commutateur comprenant un multiplexeur réparti ayant un certain nombre de modules de commutation (A1-Am, P1-Pn) connectés en parallèle avec un bus de données commun (1) et disposé pour transmettre les données au bus de données commun (1), et des moyens de commande (2) également connectés au bus de données commun (1) et disposés pour transmettre des signaux de commande au bus de données commun en vue de commander l'adressage des modules de commutation (A1-Am, P1-Pn), de sorte que les données reçues par un module de commutation de source connecté à ladite une ligne de données sont directement transmises, via le bus de données commun (1), à un module de commutation de destination connecté à ladite une autre ligne de données sélectionnée, en réponse à un signal de commande provenant des moyens de commande (2), caractérisé en ce que les moyens de commande (2) sont disposés pour associer lesdites données reçues par le module de commutation de source à l'adresse du module de commutation de destination et à une voie logique respective d'une trame sortante multiplexée du module de commutation de destination, en ce que le module de commutation de destination est disposé pour associer à cette voie logique un nombre prédéterminé de tranches de temps libres de la trame sortante de façon à obtenir la capacité requise pour cette voie, et en ce que le module de commutation de destination est disposé pour assembler lesdites données reçues dans les tranches de temps associées de la trame sortante en fonction des éléments d'une liste chaînée en boucle associée à la voie logique correspondante des tranches de temps sortantes, chacune desdites données reçues étant assemblée dans une des tranches de temps respective et définie par l'élément suivant de ladite liste apparaissant chronologiquement, par rapport au moment de la réception desdites données reçues.

2. Noeud de commutation de données selon la revendication 1, dans lequel les moyens de commande (2) comprennent des moyens à table à consulter (4) disposés en réponse aux informations d'adresses associées aux données provenant de ladite une ligne de données en vue de fournir ladite adresse du module de commutation de destination et d'activer ledit module de commutation de destination de façon qu'il lise les données provenant du bus de données commun et les transmettent à la trame sortante de ladite autre ligne de données sélectionnée.

3. Noeud de commutation de données selon la revendication 2, dans lequel les moyens à table à consulter (4) se trouvent sous la forme de tables à consulter respectives comprises dans les modules de commutation et disposées en réponse aux informations d'adresses associées aux données provenant de ladite une ligne de données en vue de transmettre l'adresse dudit module de commutation de destination.

4. Noeud de commutation de données selon la revendication 2 ou 3, dans lequel les moyens à table à consulter (4) sont disposées en réponse aux informations d'adresses en vue de transmettre au bus de données commun (1) l'identité de ladite voie logique associée au module de commutation de destination.

5. Noeud de commutation de données selon l'une quelconque des revendications précédentes, dans lequel ledit nombre prédéterminé de tranches de temps libres est le premier nombre de tranches de temps libres de ce type de la trame sortante par rapport au début de la trame.

6. Procédé de mise en oeuvre d'un multiplexeur, comportant la réception d'une pluralité de voies et la transmission aux voies selon des tranches de temps imbriquées respectives d'une trame multiplexée sortante, caractérisé par les étapes consistant à assigner à une voie entrante la voie logique respective d'une trame sortante, à associer à cette voie logique un nombre prédéterminé de tranches de temps libres de façon à obtenir la capacité requise pour cette voie, à associer les données des tranches de temps de la voie entrante à la voie logique alignée, et à assembler les données reçues de la voie entrante dans les tranches de temps associées respectivement de la trame sortante en fonction des éléments successifs d'une liste chaînée en boucle associée à la voie logique correspondante des tranches de temps sortantes, chacune desdites données étant lue à partir du bus de données commun et assemblée dans ladite une tranche de temps respective de la trame sortante telle qu'elle est définie par l'élément suivant de ladite liste apparaissant chronologiquement, par rapport au moment de la lecture desdites données à partir du bus de données commun.

7. Procédé selon la revendication 6, comportant la détection de l'apparition d'un glissement entre les données entrantes et sortantes et la modification de la correspondance entre lesdites données reçues de la voie entrante et les éléments de la liste chaînée correspondante.

8. Procédé selon la revendication 6 ou 7, pour la mise en oeuvre d'un multiplexeur comportant une pluralité de modules de commutation connectés à un bus de données commun, chaque module de commutation comprenant une table à consulter, le procédé comportant en outre l'étape consistant à mettre en correspondance les voies de données entrantes, à chaque module de commutation, avec les voies logiques sortantes, en se référant à la table à consulter respective.

9. Procédé selon la revendication 6 ou 7, pour la mise en oeuvre d'un multiplexeur comportant une pluralité de modules de commutation connectés à un bus de données commun et un module de commande connecté au bus de données commun et comportant une table à consulter, le procédé comportant en outre l'étape consistant à mettre en correspondance les voies de données entrantes, à chaque module de commutation, avec les voies logiques sortantes, en se référant à la table à consulter du module de commande.

10. Procédé selon la revendication 8 ou 9, pour la mise en oeuvre d'un multiplexeur dans lequel au moins un module de commutation comporte une mémoire tampon de sortie, le procédé comportant en outre l'étape consistant à la mise en correspondance des voies logiques sortantes avec les positions des tranches de temps sortantes dans la, ou une, mémoire tampon de sortie respective.

11. Procédé selon l'une quelconque des revendications 6 à 9, dans lequel ledit nombre prédéterminé de tranches de temps libres est le premier nombre de tranches de temps libres de ce type de la trame sortante par rapport au début de la trame.
